# FASCICULE DE BREVET EUROPEEN

(11) **EP 4 214 044 B1**
(45) Date de publication et mention de la délivrance du brevet: **05.06.2024**
(21) Numéro de dépôt: 21778182.2
(22) Date de dépôt: 06.09.2021
(51) Int. Cl.: B29C 70/44, B29C 70/48, B29C 70/46, B29C 33/30, B29C 33/76, F01D 25/24, B29C 37/00, B29C 43/36, B29C 33/38, B29C 33/20, B29C 43/02, B29C 45/14

(54) **MOULE POUR LA FABRICATION D'UN CARTER DE SOUFFLANTE DE TURBOMACHINE EN MATERIAU COMPOSITE A DILATATION DIFFERENTIELLE**
FORM ZUR HERSTELLUNG EINES TURBOMASCHINENGEBLÄSEGEHÄUSES AUS EINEM VERBUNDSTOFF MIT UNTERSCHIEDLICHER EXPANSION
MOLD FOR MANUFACTURING A TURBOMACHINE FAN CASING MADE OF A COMPOSITE MATERIAL WITH DIFFERENTIAL EXPANSION

(30) Priorité: 16.09.2020 FR 2009366
(43) Date de publication de la demande: 26.07.2023
(73) Titulaire: SAFRAN AIRCRAFT ENGINES, 75015 Paris (FR)
(72) Inventeur: FABRE, Hubert, Jean, Marie, 77550 MOISSY-CRAMAYEL (FR); BLAISE, Maxime, Marie, Désiré, 77550 MOISSY-CRAMAYEL (FR)
(74) Mandataire: Cabinet Beau de Loménie
(86) Numéro de dépôt international: PCT/FR2021/051520
(87) Numéro de publication internationale: WO 2022/058671

(56) Documents cités:
- WO-A1-2018/234687
- FR-A1- 2 879 497
- US-A- 5 597 435

## Description

### Domaine Technique

La présente invention se rapporte au domaine général de la fabrication des carters de turbomachine, et plus particulièrement des carters de rétention pour soufflante de turbine à gaz pour moteur aéronautique.

### Technique antérieure

Dans une turbomachine aéronautique un carter de soufflante remplit plusieurs fonctions. Le carter de soufflante définit la veine d'entrée d'air de la turbomachine, supporte un matériau abradable en regard du sommet des aubes de la soufflante, supporte une éventuelle structure d'absorption d'ondes sonores pour le traitement acoustique en entrée de la turbomachine, et incorpore ou supporte un bouclier de rétention.

Le bouclier de rétention forme un piège retenant les débris, tels que les objets ingérés ou des fragments d'aubes endommagées, projetés sous l'effet de la force centrifuge, afin d'éviter que ces débris traversent le carter et atteignent d'autres parties de l'aéronef.

Il est connu de réaliser le carter de soufflante en matériau composite, et plus particulièrement en matériau composite à matrice organique. Pour ce faire, une texture fibreuse est enroulée autour d'un mandrin afin de former une préforme fibreuse qui possède la forme du carter à fabriquer. La préforme fibreuse est ensuite densifiée par une matrice.

Afin de réaliser la densification de la préforme fibreuse par la matrice, ladite préforme fibreuse est enroulée autour d'un mandrin d'imprégnation, puis des secteurs angulaires de contre-moule sont disposés autour du mandrin d'imprégnation afin de former le moule d'injection. Le document WO 2018/234687 divulgue un exemple d'un moule d'injection similaire. Un matériau précurseur de la matrice est ensuite injecté dans le moule afin de densifier la préforme fibreuse avec ledit matériau précurseur de la matrice. Une fois la préforme fibreuse densifiée, le matériau précurseur est polymérisé.

Afin de donner à la préforme fibreuse l'épaisseur du carter à fabriquer et d'obtenir le taux volumique de fibres visé, les secteurs angulaires de contre-moule sont assemblés sur le mandrin d'imprégnation de sorte à comprimer ladite préforme fibreuse contre ledit mandrin d'imprégnation autour duquel ladite préforme fibreuse est enroulée.

Toutefois, une telle compaction de la préforme fibreuse lors de l'assemblage des secteurs angulaires de contre-moule sur le mandrin d'imprégnation peut provoquer l'apparition de défauts, tels que par exemple le pinçage de fibres de la préforme fibreuse, des flambages de fibres de la préforme fibreuse, ou encore des variations locales du taux volumique de fibres qui sont susceptibles d'impacter la porosité locale de la préforme fibreuse en vue de sa densification.

### Exposé de l'invention

La présente invention a donc pour but principal de fournir une solution répondant au problème décrit précédemment.

Selon un premier aspect conformément à la revendication 1, l'invention concerne un moule pour la fabrication d'un carter de soufflante de turbomachine en matériau composite à renfort fibreux densifié par une matrice qui comprend :
- un mandrin d'imprégnation autour duquel une préforme fibreuse est destinée à être enroulée ;
- une pluralité de secteurs angulaires de contre-moule assemblés sur le contour externe du mandrin d'imprégnation qui sont destinés à fermer le moule ;

caractérisé en ce que le mandrin d'imprégnation comprend d'une part un corps principal, et d'autre part un fut annulaire qui est disposé autour du corps principal et autour duquel la préforme fibreuse est destinée à être enroulée, le fut et les secteurs angulaires délimitant une cavité d'imprégnation destinée à recevoir la préforme fibreuse,
le corps principal et les secteurs angulaires étant en un premier matériau qui présente un premier coefficient de dilatation thermique, le fut étant en un deuxième matériau qui présente un deuxième coefficient de dilatation thermique, le deuxième coefficient de dilatation thermique étant supérieur au premier coefficient de dilatation thermique.

Un tel moule offre l'avantage de pouvoir augmenter à froid la taille du logement dans lequel la préforme fibreuse est destinée à être placée dans le moule. Cela permet de réduire, voire de supprimer, la compression appliquée sur la préforme fibreuse lors du montage des secteurs angulaires sur le mandrin d'imprégnation tout en assurant ultérieurement le compactage de la préforme fibreuse lors de la chauffe du moule. En effet, le logement du moule dans lequel est placé la préforme fibreuse est délimité entre les secteurs angulaires et le fut. Le fut étant en un matériau présentant un coefficient de dilatation supérieur à celui des secteurs angulaires, il est possible d'avoir à froid une taille de logement suffisamment grande pour réduire, voire supprimer, l'effort de compression exercé sur la préforme fibreuse et d'assurer à chaud son compactage par la dilatation du fut.

En outre, en assurant la compaction de la préforme fibreuse par la dilatation du fut à chaud et non plus par le serrage à froid de chaque secteur angulaire sur le mandrin, on réalise un compactage homogène sans concentrations de contraintes.

Selon une caractéristique possible, le corps principal comprend un flasque située à chacune des extrémités axiales du corps principal, chaque flasque comprenant une surface conique qui est adaptée pour coopérer avec une surface conique complémentaire située à chacune des extrémités axiales du fut, le fut étant adapté pour glisser le long des surfaces coniques des flasques par différence de dilation thermique entre le corps principal et le fut.

Selon une caractéristique possible, un revêtement antifriction est déposé sur la surface conique de chaque flasque, et/ou sur la surface conique de chaque extrémité axiale du fut.

Selon une caractéristique possible, un joint est situé sur la surface conique de chaque flasque, ou sur la surface conique de chaque extrémité axiale du fut, ou sur la surface supérieure du fut.

Selon une caractéristique possible, le fut est formé par une pluralité de tronçons annulaires qui sont assemblés entre eux avec une fixation amovible.

Selon une caractéristique possible, le fut est configuré pour d'une part être en butée contre des rayons du corps principal et être situé à distance des secteurs angulaires lorsque le moule est à une température ambiante, et d'autre part être en butée contre les secteurs angulaires et être situé à distance des rayons du corps principal lorsque le moule est à une température de cuisson de la matrice.

Selon une caractéristique possible, au moins un organe de positionnement à chaud est présent sur au moins un secteur angulaire, ledit au moins un organe de positionnement à chaud étant configuré pour pénétrer dans un orifice de positionnement à chaud complémentaire présent sur le fut lorsque ledit fut est en butée contre les secteurs angulaires, ou inversement, à savoir qu'au moins un organe de positionnement à chaud est présent sur le fut, ledit au moins un organe de positionnement à chaud étant configuré pour pénétrer dans un orifice de positionnement à chaud complémentaire présent sur un secteur angulaire lorsque les secteurs angulaires sont en butée contre le fut.

Selon une caractéristique possible, un organe de positionnement à froid est présent sur les rayons du corps principal, l'organe de positionnement à froid étant configuré pour pénétrer dans un logement ou rainure de positionnement à froid complémentaire situé sur le fut ou sur le rayons lorsque ledit fut est en butée contre les rayons du corps principal.

Selon un deuxième aspect conformément à la revendication 9, l'invention concerne un procédé de fabrication d'un carter de soufflante de turbomachine en matériau composite à renfort fibreux densifié par une matrice avec un moule selon l'invention, comprenant les étapes suivantes :
- enrouler une préforme fibreuse de carter de soufflante autour du fut du mandrin d'imprégnation ;
- assembler la pluralité de secteurs angulaires sur le contour externe du mandrin d'imprégnation autour duquel la préforme fibreuse est enroulée ;
- chauffer le moule pour comprimer la préforme fibreuse entre le fut et les secteurs angulaires ;
- injecter un matériau précurseur de la matrice dans la préforme fibreuse ;
- polymériser le matériau précurseur de la matrice.

Selon une caractéristique possible, le procédé comprend l'assemblage de la pluralité de tronçons annulaires pour former le fut.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 représente schématiquement une demi-vue en coupe d'un moule vide à froid selon un mode de réalisation.
[Fig. 2] La figure 2 représente schématiquement le moule de la figure 1 à l'intérieur duquel une préforme fibreuse est installée.
[Fig. 3] La figure 3 représente schématiquement une demi-vue en coupe du moule de la figure 1 à chaud.
[Fig. 4] La figure 4 représente schématiquement le moule de la figure 2 à chaud.
[Fig. 5] La figure 5 représente schématiquement une vue d'une partie d'une moule à froid muni d'un organe de positionnement à chaud selon une variante de réalisation du moule de l'invention.
[Fig. 6] La figure 6 représente schématiquement une vue à chaud de la partie de moule de la figure 5.

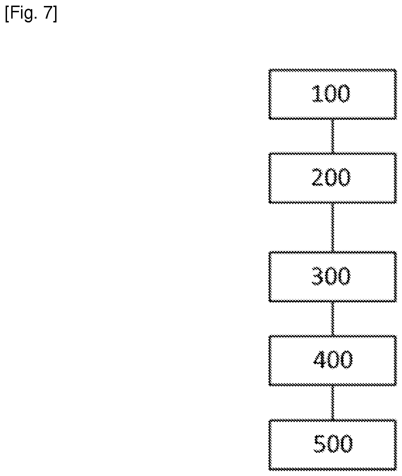

[Fig. 7] La figure 7 représente schématiquement les étapes d'un procédé de fabrication d'un carter en matériau composite selon une mise en oeuvre possible de l'invention.

### Description des modes de réalisation

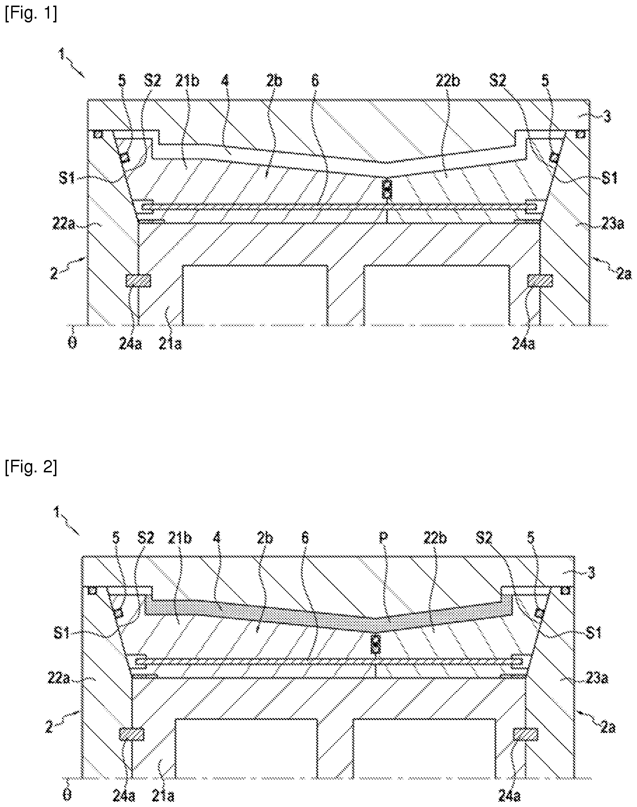

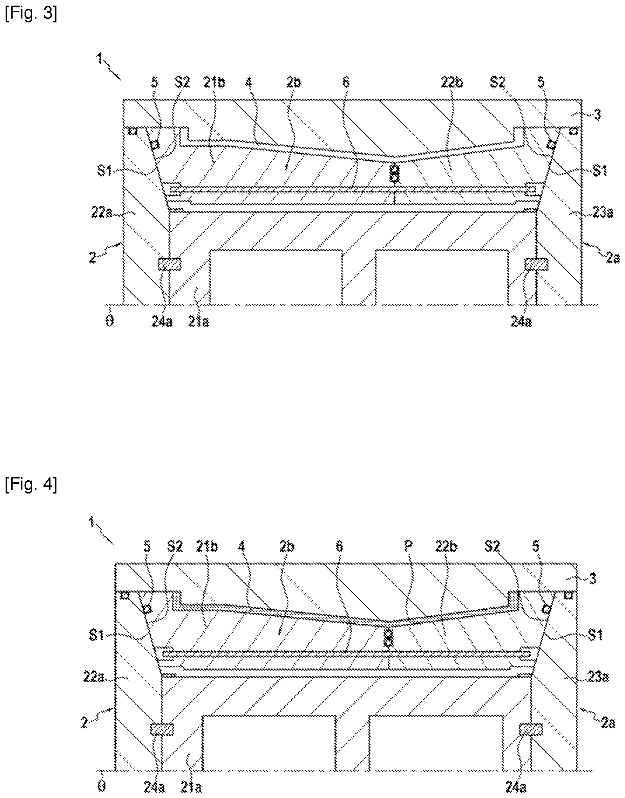

Comme cela est illustré sur les figures 1 à 4, un moule 1 pour la fabrication d'un carter de soufflante d'une turbomachine d'aéronef en matériau composite à renfort fibreux densifié par une matrice comprend d'une part un mandrin d'imprégnation 2 de forme annulaire selon un axe principal θ, et d'autre part une pluralité de secteurs angulaires 3 de contre-moule. Les secteurs angulaires 3 sont fixés de manière amovible sur le contour extérieur du mandrin d'imprégnation 2 afin de fermer le moule 1 et ainsi former une cavité de moulage 4 dans laquelle une préforme fibreuse P est placée afin d'être densifiée et ainsi former le renfort fibreux du carter en matériau composite.

Le moule 1 est destiné à être placé dans une étuve afin notamment de réaliser un traitement thermique de polymérisation du matériau précurseur de la matrice qui a été injecté dans la préforme fibreuse P. Selon une variante de réalisation du moule, celui-ci peut être équipé de moyens de chauffage propres.

Le mandrin d'imprégnation 2 est formé d'une part d'un corps principal 2a qui possède une forme annulaire d'axe principal θ, et d'un fut 2b qui possède également une forme annulaire d'axe principal θ. Le fut 2b est situé autour du corps principal 2a du mandrin d'imprégnation 2. En outre, afin notamment de permettre de disposer le fut 2b autour du corps principal 2a, ledit corps principal 2a est formé par l'assemblage de rayons 21a d'axe principal θ avec deux flasques 22a et 23a qui sont chacun située à une extrémité axiale des rayons 21a. Les flasques 22a et 23a forment donc chacun une extrémité axiale du corps principal 2a. Les flasques 22a et 23a sont des pièces circulaires d'axe θ. Les flasques 22a et 23a sont fixés aux extrémités axiales des rayons 21a par des éléments de fixation 24a, par exemple une fixation par boulonnage. Une pièce cylindrique ou virole (non représentée sur les figures 1 à 4) peut être interposée entre les rayons et le fut.

Pour monter le fut 2b autour du corps principal 2a, les flasques 22a et 23a sont séparés des rayons 21a, et le fut 2b est enfilé autour des rayons 21a, le fut 2b présentant un diamètre interne supérieur au diamètre externe des rayons 21a. Une fois le fut 2b installé autour des rayons 21a, les flasques 22a et 23a sont chacun fixées sur une extrémité axiale des rayons 21a, lesdits flasques 22a et 3a formant ainsi chacun une butée axiale pour le fut 2b.

Le fut 2b participe avec les secteurs angulaire 3 à la formation de la cavité de moulage 4 dans laquelle la préforme fibreuse P est installée, la préforme fibreuse P étant enroulée autour dudit fut 2b. En outre, la forme du contour extérieur du fut 2b autour duquel la préforme fibreuse P est enroulée est adaptée afin de donner la forme désirée au carter, le choix du fut 2b placé autour du corps principal 2a étant ainsi adapté en fonction du carter à fabriquer.

Comme visible sur la figure 2, le volume de la cavité de moulage 4, et particulièrement l'épaisseur de la cavité de moulage 4, est plus importante lorsque le moule 1 est froid, c'est-à-dire à température ambiante (20°C), que lorsque le moule 1 est chaud, c'est-à-dire aux températures supérieures rencontrées lors des étapes de séchage, d'injection du précurseur liquide de matrice et de cuisson de la matrice du matériau composite. Cette réduction de l'épaisseur de la cavité de moulage 4 a pour effet de comprimer la préforme fibreuse P, permettant ainsi de donner au carter l'épaisseur désirée et obtenir le taux volumique de fibres souhaité. La préforme fibreuse P est ainsi uniquement comprimée pendant les montées en température du moule 1. La préforme fibreuse P n'est ainsi plus comprimée par l'installation des secteurs angulaires 3 de contre-moule sur le mandrin d'imprégnation 2, permettant ainsi d'éviter la formation de défauts provoqués par une compression non uniforme de la préforme fibreuse P, comme par exemple les pincements de fibres ou les flambages de fibres.

Cette réduction du volume de la cavité de moulage 4 par chauffage est obtenue par une différence de dilatation thermique entre d'une part le fut 2b, et d'autre part le corps principal 2a et les secteurs angulaires 3, le fut 2b se dilatant davantage sous l'effet de la chaleur que les autres éléments du moule 1. Sous l'effet de la chaleur, par exemple la chaleur utilisée pour la cuisson de la matrice, le diamètre du fut 2b va augmenter davantage que celui des secteurs angulaires 3 qui forment le contre-moule, comprimant ainsi la préforme fibreuse P entre le fut 2b et les secteurs angulaires 3.

Une telle différence de dilatation thermique est obtenue en utilisant d'une part un premier matériau avec un premier coefficient de dilatation thermique pour former le corps principal 2a et les secteurs angulaires 3, et d'autre part un deuxième matériau avec un deuxième coefficient de dilatation thermique pour former le fut 2b, le deuxième coefficient de dilatation thermique étant supérieur au premier coefficient de dilatation thermique.

Selon un premier exemple possible non limitatif de l'invention, le premier matériau est un acier à bas coefficient de dilation thermique présentant un coefficient de 10×10⁻⁶ K⁻¹, et le deuxième matériau est un acier à haut coefficient de dilatation thermique présentant un coefficient de 15×10⁻⁶ K⁻¹. Ainsi, avec une différence de coefficient de dilatation thermique de 5×10⁻⁶ K⁻¹ entre le premier matériau et le deuxième matériau, une différence d'épaisseur de la cavité de moulage 4 de 0,8 mm est obtenue pour la fabrication d'un carter présentant un rayon d'environ 1 mètre.

Selon un deuxième exemple possible non limitatif de l'invention, le premier matériau est un acier standard avec un coefficient de dilatation thermique de 12×10⁻⁶ K⁻¹, et le deuxième matériau est de l'aluminium avec un coefficient de dilatation thermique de 22×10⁻⁶ K⁻¹. Ainsi, avec une différence de coefficient de dilatation thermique de 10×10⁻⁶ K⁻¹ entre le premier matériau et le deuxième matériau, une différence d'épaisseur de la cavité de moulage 4 de 1,6 mm est obtenue pour la fabrication d'un carter présentant un rayon d'environ 1 mètre.

Selon un troisième exemple possible non limitatif de l'invention, le premier matériau est de l'invar avec un coefficient de dilatation thermique de 1,5×10⁻⁶ K⁻¹, et le deuxième matériau est de l'aluminium avec un coefficient de dilatation thermique de 22×10⁻⁶ K⁻¹. Ainsi, avec une différence de coefficient de dilatation thermique de 20×10⁻⁶ K⁻¹ entre le premier matériau et le deuxième matériau, une différence d'épaisseur de la cavité de moulage 4 de 3,2 mm est obtenue pour la fabrication d'un carter présentant un rayon d'environ 1 mètre.

Par ailleurs, plus le rayon du carter à fabriquer est important, et donc le rayon des différents éléments du moule 1 également, plus la variation d'épaisseur de la cavité de moulage 4 sera importante.

Comme visible sur les figures 1 à 6, le fut 2b est mobile entre une position à froid dans laquelle le fut 2b est d'une part en butée contre les rayons 21a et d'autre part située à distance des secteurs angulaires 3, et une position à chaud dans laquelle le fut 2b est d'une part en butée contre les secteurs angulaires 3 et d'autre part située à distance des rayons 21a. La compression appliquée sur la préforme fibreuse lorsque le fut 2b est en position à froid est très faible, voire nulle. La préforme fibreuse P est réellement comprimée lorsque le fut 2b est en position à chaud.

Selon un mode de réalisation possible, afin de guider l'augmentation du diamètre du fut 2b lors du chauffage du moule 1, le fut 2b est amené à coulisser à chacune de ses extrémités axiales le long d'une surface conique S1 formée sur chacun des flasque 22a et 23a. Pour ce faire, chacune des extrémités axiales du fut 2b comprend une surface conique S2 complémentaire à la surface conique S1 formée sur les flasques 22a et 23a, chaque surface conique S1 étant plaquée contre une surface conique S2 complémentaire. L'inclinaison des surfaces coniques S1 et S2 est adaptée à la dilation thermique du fut 2b, notamment à l'augmentation de la longueur dudit fut 2b.

Afin d'améliorer le glissement du fut 2b contre les flasques 22a et 23a, un revêtement antifriction peut être est déposé sur la surface conique S1 de chaque flasque 22a et 23a, ou sur la surface conique S2 de chaque extrémité axiale du fut 2b, ou bien sur la surface conique S1 de chaque flasque 22a, 23a et sur la surface conique S2 de chaque extrémité axiale du fut 2b.

Afin d'améliorer l'étanchéité de la cavité de moulage 4, un joint 5 peut être disposé sur la surface conique S1 de chacun des flasques 22a, 23a, ou bien sur la surface conique S2 de chacune des extrémités axiales du fut 2b, ou bien encore sur la surface conique S1 de chacun des flasques 22a, 23a et sur la surface conique S2 de chacune des extrémités axiales du fut 2b. Le joint 5 peut par exemple être un joint torique qui est installé dans une rainure formée dans une surface conique S1 ou une surface conique S2. Selon une variante de réalisation, un joint peut être également disposé sur le sommet d'une des extrémités du fut. Dans ce cas, le joint doit être compatible avec la dilatation de cette partie du moule.

Par ailleurs, comme cela est illustré sur les figures 1 à 4, le fut 2b est formé par une pluralité de tronçons annulaires 21b, 22b, qui sont assemblés entre eux par leurs extrémités axiales avec une fixation amovible. Selon un exemple possible, les tronçons annulaires 21b, 22b sont fixés entre eux par une pluralité de vis traversantes 6. En outre, des joints peuvent être disposés aux jonctions entre les tronçons annulaires 21b, 22b afin d'améliorer l'étanchéité du fut 2b. D'autres configurations d'assemblage de tronçons de fut sont bien entendu envisageables.

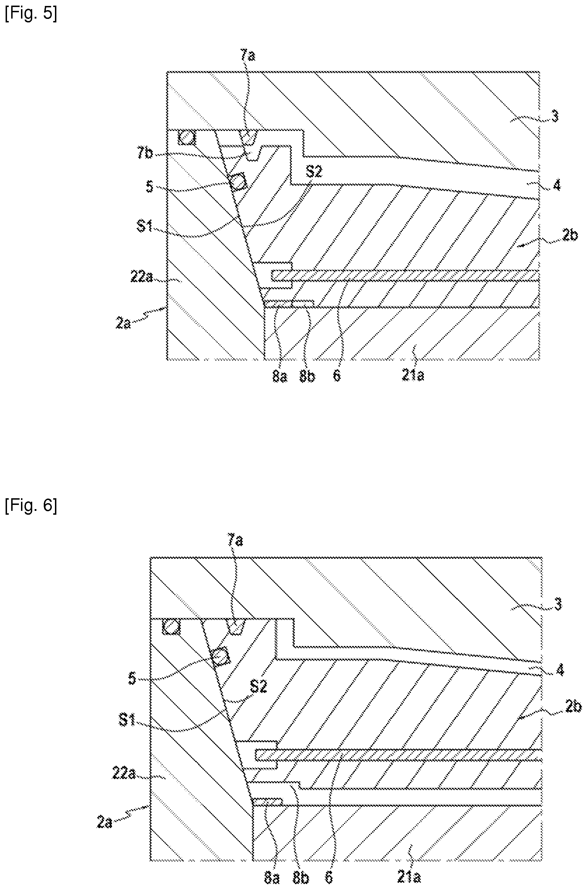

Selon un mode de réalisation possible illustré sur les figures 5 et 6, au moins un organe de positionnement à chaud 7a est situé sur au moins un secteur angulaire 3 de contre moule, l'organe de positionnement à chaud 7a faisant saillie dans la cavité de moulage 4. Un secteur angulaire 3 peut comprendre un ou plusieurs organes de positionnement à chaud 7a. Cet ou ces organes de positionnement à chaud 7a sont configurés pour chacun pénétrer à l'intérieur d'un orifice de positionnement à chaud 7b formé dans le fut 2b lorsque le moule 1 est chaud et qu'ainsi le fut 2b est en butée contre les secteurs angulaires 3. L'organe de positionnement à chaud 7a peut par exemple être un pion, ou bien une nervure. L'organe de positionnement à chaud 7a peut avoir une section conique, l'extrémité la plus fine étant dirigée vers l'orifice de positionnement à chaud 7b. inversement, au moins un organe de positionnement à chaud est présent sur le fut, chaque organe de positionnement à chaud étant configuré pour pénétrer dans un orifice de positionnement à chaud complémentaire présent sur un secteur angulaire lorsque les secteurs angulaires sont en butée contre le fut.

Selon un mode de réalisation possible, au moins un organe de positionnement à froid 8a est situé sur les rayons 21a, le ou les organes de positionnement à froid 8a étant dirigés vers le fut 2b. Cet ou ces organes de positionnement à froid 8a sont configurés pour coopérer chacun avec un logement ou rainure de positionnement à froid 8b formé dans le fut 2b lorsque le moule 1 est froid et qu'ainsi le fut 2b est en butée contre les rayons 21a. L'organe de positionnement à froid 8a peut présenter différentes formes aptes à coopérer avec le logement 8b. Dans l'exemple décrit ici, l'organe de positionnement à froid est constitué d'une pièce annulaire coopérant avec une rainure de positionnement à froid 8b. Toujours dans l'exemple décrit ici, la rainure 8b est plus large que l'organe 8a et débouche sur la partie latérale du fut. Selon une variante de réalisation, le logement ou rainure de positionnement à froid peut présenter des dimensions correspondant à celles de l'organe de positionnement à froid. Dans ce cas l'organe et le logement ou rainure de positionnement à froid réalisent en outre une fonction de centrage. En outre, selon encore une variante de réalisation, une paire d'organe et de logement/rainure peuvent être prévue pour chacun des tronçons de fut.

Le moule 1 peut être utilisé en mettant en oeuvre les étapes suivantes :
- 100: enrouler la préforme fibreuse P autour du fut 2b du mandrin d'imprégnation 2 ;
- 200 : assembler les secteurs angulaires 3 sur le contour externe du mandrin d'imprégnation 2 autour duquel la préforme fibreuse P est enroulée, la préforme fibreuse P étant partiellement ou pas comprimée ;
- 300 : chauffer le moule 1 pour comprimer la préforme fibreuse P entre le fut 2b et les secteurs angulaires 3, le fut 2b passant de sa position à froid à sa position à chaud sous l'effet de la chaleur. La température de chauffage peut par exemple être comprise entre 100°C et 300 °C. Cette étape peut également permettre éventuellement de sécher la préforme ;
- 400 : injecter un matériau précurseur de la matrice dans la préforme fibreuse ;
- 500 : polymériser le matériau précurseur de la matrice afin de former le carter en chauffant le matériau précurseur de la matrice, le fut 2b comprimant la préforme fibreuse P sous l'effet de la chaleur.

La préforme fibreuse P est principalement compactée durant l'étape 300 de chauffage du moule 1, puis densifiée en injectant le matériau précurseur de la matrice et en polymérisant ledit matériau précurseur. Le taux de compaction final de la préforme fibreuse est atteint lors de la dernière étape de chauffe du moule, à savoir pendant la polymérisation.

## Revendications

1. Moule (1) pour la fabrication d'un carter de soufflante de turbomachine en matériau composite à renfort fibreux densifié par une matrice qui comprend :
- un mandrin d'imprégnation (2) autour duquel une préforme fibreuse (P) est destinée à être enroulée ;
- une pluralité de secteurs angulaires (3) de contre-moule assemblés sur le contour externe du mandrin d'imprégnation (2) qui sont destinés à fermer le moule (1);
le mandrin d'imprégnation (2) comprenant d'une part un corps principal (2a), et d'autre part un fut (2b) annulaire qui est disposé autour du corps principal (2a) et autour duquel la préforme fibreuse (P) est destinée à être enroulée, le fut (2b) et les secteurs angulaires (3) délimitant une cavité de moulage (4) destinée à recevoir la préforme fibreuse (P),
le corps principal (2a) et les secteurs angulaires (3) étant en un premier matériau qui présente un premier coefficient de dilatation thermique, le fut (2b) étant en un deuxième matériau qui présente un deuxième coefficient de dilatation thermique, le deuxième coefficient de dilatation thermique étant supérieur au premier coefficient de dilatation thermique.

2. Moule (1) selon la revendication 1, dans lequel le corps principal (2a) comprend un flasque (22a, 23a) située à chacune des extrémités axiales du corps principal (2a), chaque flasque (22a, 23a) comprenant une surface conique (S1) qui est adaptée pour coopérer avec une surface conique (S2) complémentaire située à chacune des extrémités axiales du fut (2b), le fut (2b) étant adapté pour glisser le long des surfaces coniques (S1) des flasques (22a, 23a) par différence de dilation thermique entre le corps principal (2a) et le fut (2b).

3. Moule (1) selon la revendication 2, dans lequel un revêtement antifriction est déposé sur la surface conique (S1) de chaque flasque (22a, 23a), ou sur la surface conique (S2) de chaque extrémité axiale du fut (2b).

4. Moule (1) selon l'une quelconque des revendications 2 à 3, dans lequel un joint (5) est situé sur la surface conique (S1) de chaque flasque (22a, 22b), ou sur la surface conique (S2) de chaque extrémité axiale du fut (2b), ou sur la surface supérieure du fut (2b).

5. Moule (1) selon l'une quelconque des revendications 1 à 4, dans lequel le fut (2b) est formé par une pluralité de tronçons annulaires (21b, 22b) qui sont assemblés entre eux avec une fixation amovible.

6. Moule (1) selon l'une quelconque des revendications 1 à 5, dans lequel le fut (2b) est configuré pour d'une part être en butée contre des rayons (21a) du corps principal (2a) et être situé à distance des secteurs angulaires (3) lorsque le moule (1) est à une température ambiante, et d'autre part être en butée contre les secteurs angulaires (3) et être situé à distance des rayons (21a) du corps principal (2a) lorsque le moule (1) est à une température de cuisson de la matrice.

7. Moule (1) selon la revendication 6, dans lequel au moins un organe de positionnement à chaud (7a) est situé sur au moins un secteur angulaire (3) ou sur le fut (2), ledit au moins un organe de positionnement à chaud (7a) étant configuré pour pénétrer dans un orifice de positionnement à chaud (7b) complémentaire situé sur le fut (2b) ou sur un secteur angulaire (3) lorsque ledit fut (2b) est en butée contre les secteurs angulaires (3).

8. Moule (1) selon l'une quelconque des revendications 6 à 7, dans lequel un organe de positionnement à froid (8a) est situé sur les rayons (21a) du corps principal (2a) ou sur le fut, l'organe de positionnement à froid (8a) étant configuré pour pénétrer dans un logement ou rainure de positionnement à froid (8b) complémentaire situé sur le fut (2b) ou sur les rayons (21a) lorsque ledit fut (2b) est en butée contre les rayons (21a) du corps principal (2a).

9. Procédé de fabrication d'un carter de soufflante de turbomachine en matériau composite à renfort fibreux densifié par une matrice avec un moule selon l'une quelconque des revendications 1 à 8, comprenant les étapes suivantes :
- (100) enrouler une préforme fibreuse (P) de carter de soufflante autour du fut (2b) du mandrin d'imprégnation (2) ;
- (200) assembler la pluralité de secteurs angulaires (3) sur le contour externe du mandrin d'imprégnation (2) autour duquel la préforme fibreuse (P) est enroulée ;
- (300) chauffer le moule (1) pour comprimer la préforme fibreuse (P) entre le fut (2b) et les secteurs angulaires (3) ;
- (400) injecter un matériau précurseur de la matrice dans la préforme fibreuse (P) ;
- (500) polymériser le matériau précurseur de la matrice.

10. Procédé selon la revendication 9, dans lequel le procédé comprend l'assemblage de la pluralité de tronçons annulaires (21b, 22b) pour former le fut (2b).

## Patentansprüche

1. Form (1) für die Herstellung eines Gebläsegehäuses einer Turbomaschine aus Verbundmaterial mit Faserverstärkung, die durch eine Matrix verdichtet ist, wobei die Form umfasst:
- einen Imprägnierdorn (2), um welchen eine Faservorform (P) gewickelt werden soll,
- mehrere Winkelsektoren (3) einer Gegenform, die an der Außenkontur des Imprägnierdorns (2) zusammengesetzt sind und die dazu bestimmt sind, die Form (1) zu schließen,
wobei der Imprägnierdorn einerseits einen Hauptkörper (2a) und andererseits eine ringförmige Trommel (2b) umfasst, die um den Hauptkörper (2a) herum angeordnet ist und um welche die Faservorform (P) gewickelt werden soll, wobei die Trommel (2b) und die Winkelsektoren (3) einen Formhohlraum (4) begrenzen, der die Faservorform (P) aufnehmen soll,
wobei der Hauptkörper (2a) und die Winkelsektoren (3) aus einem ersten Material bestehen, das einen ersten Wärmeausdehnungskoeffizienten aufweist, (und) die Trommel (2b) aus einem zweiten Material besteht, das einen zweiten Wärmeausdehnungskoeffizienten aufweist, wobei der zweite Wärmeausdehnungskoeffizient größer als der erste Wärmeausdehnungskoeffizient ist.

2. Form (1) nach Anspruch 1, wobei der Hauptkörper (2a) einen Flansch (22a, 23a) umfasst, der an jedem der axialen Enden des Hauptkörpers (2a) angeordnet ist, wobei jeder Flansch (22a, 23a) eine konische Fläche (S1) umfasst, die dazu geeignet ist, mit einer komplementären konischen Fläche (S2) zusammenzuwirken, die an jedem der axialen Enden der Trommel (2b) angeordnet ist, wobei die Trommel (2b) dazu geeignet ist, aufgrund der unterschiedlichen Wärmeausdehnung zwischen dem Hauptkörper (2a) und der Trommel (2b) an den konischen Flächen (S1) der Flansche (22a, 23a) entlang zu gleiten.

3. Form (1) nach Anspruch 2, wobei eine Anti-Reibungs-Beschichtung auf die konische Fläche (S1) jedes Flansches (22a, 23a) oder auf die konische Fläche (S2) jedes axialen Endes der Trommel (2b) abgeschieden ist.

4. Form (1) nach einem der Ansprüche 2 bis 3, wobei sich eine Dichtung (5) auf der konischen Fläche (S1) jedes Flansches (22a, 22b) oder auf der konischen Fläche (S2) jedes axialen Endes der Trommel (2b) oder auf der oberen Fläche der Trommel (2b) befindet.

5. Form (1) nach einem der Ansprüche 1 bis 4, wobei die Trommel (2b) aus mehreren ringförmigen Teilstücken (21b, 22b) gebildet ist, die mit einer lösbaren Befestigung untereinander zusammengesetzt sind.

6. Form (1) nach einem der Ansprüche 1 bis 5, wobei die Trommel (2b) so ausgestaltet ist, dass sie einerseits an Radien (21a) des Hauptkörpers (2a) anliegt und von den Winkelsektoren (3) beabstandet ist, wenn die Form (1) eine Umgebungstemperatur aufweist, und andererseits an den Winkelsektoren (3) anliegt und von den Radien (21a) des Hauptkörpers (2a) beabstandet ist, wenn die Form (1) eine Temperatur zum Brennen der Matrix aufweist.

7. Form (1) nach Anspruch 6, wobei mindestens ein Heißpositionierungselement (7a) an mindestens einem Winkelsektor (3) oder an der Trommel (2) angeordnet ist, wobei das mindestens eine Heißpositionierelement (7a) dazu ausgestaltet ist, in eine komplementäre Heißpositionieröffnung (7b) einzudringen, die an der Trommel (2b) oder an einem Winkelsektor (3) angeordnet ist, wenn die Trommel (2b) an den Winkelsektoren (3) anliegt.

8. Form (1) nach einem der Ansprüche 6 bis 7, bei der sich ein Kaltpositionierungselement (8a) an den Radien (21a) des Hauptkörpers (2a) oder an der Trommel befindet, wobei das Kaltpositionierungselement (8a) dazu ausgestaltet ist, in eine komplementäre Kaltpositionierungsaufnahme oder -nut (8b), die sich an der Trommel (2b) oder an den Radien (21a) befindet, einzudringen, wenn die Trommel (2b) an den Radien (21a) des Hauptkörpers (2a) anliegt.

9. Verfahren zur Herstellung eines Gebläsegehäuses einer Turbomaschine aus Verbundmaterial mit Faserverstärkung, die durch eine Matrix verdichtet ist, mit einer Form nach einem der Ansprüche 1 bis 8, wobei das Verfahren die folgenden Schritte umfasst:
- (100) Wickeln einer Faservorform (P) des Gebläsegehäuses um die Trommel (2b) des Imprägnierdorns (2),
- (200) Zusammensetzen der mehreren Winkelsektoren (3) an der äußeren Kontur des Imprägnierdorns (2), um welchen die Faservorform (P) gewickelt ist,
- (300) Erwärmen der Form (1), um die Faservorform (P) zwischen der Trommel (2b) und den Winkelsektoren (3) zu komprimieren,
- (400) Einspritzen eines Vorläufermaterials der Matrix in die Faservorform (P),
- (500) Polymerisieren des Vorläufermaterials der Matrix.

10. Verfahren nach Anspruch 9, wobei das Verfahren das Zusammensetzen der mehreren ringförmigen Teilstücke (21b, 22b) umfasst, um die Trommel (2b) zu bilden.

## Claims

1. A mould (1) for manufacturing a turbomachine fan casing made of a composite material with fibrous reinforcement that is densified by a matrix, which mould comprises:
- an impregnation mandrel (2) around which a fibrous preform (P) is intended to be wound;
- a plurality of angular counter-mould sectors (3) assembled around the external contour of the impregnation mandrel (2), which are intended to close the mould (1);
the impregnation mandrel (2) comprising, on the one hand, a main body (2a) and, on the other hand, an annular barrel (2b) which is arranged around the main body (2a) and around which the fibrous preform (P) is intended to be wound, the barrel (2b) and the angular sectors (3) defining a moulding cavity (4) intended to receive the fibrous preform (P),
the main body (2a) and the angular sectors (3) being made of a first material that has a first thermal expansion coefficient, the barrel (2b) being made of a second material that has a second thermal expansion coefficient, the second thermal expansion coefficient being greater than the first thermal expansion coefficient.

2. The mould (1) according to claim 1, wherein the main body (2a) comprises a flange (22a, 23a) located at each of the axial ends of the main body (2a), each flange (22a, 23a) comprising a conical surface (S1) which is suitable for cooperating with a complementary conical surface (S2) located at each of the axial ends of the barrel (2b), the barrel (2b) being suitable for sliding along the conical surfaces (S1) of the flanges (22a, 23a) through the difference in thermal expansion between the main body (2a) and the barrel (2b).

3. The mould (1) according to claim 2, wherein an anti-friction coating is deposited on the conical surface (S1) of each flange (22a, 23a), or on the conical surface (S2) of each axial end of the barrel (2b).

4. The mould (1) according to any one of claims 2 to 3, wherein a seal (5) is located on the conical surface (S1) of each flange (22a, 22b), or on the conical surface (S2) of each axial end of the barrel (2b), or on the upper surface of the barrel (2b).

5. The mould (1) according to any one of claims 1 to 4, wherein the barrel (2b) is formed by a plurality of annular sections (21b, 22b) which are assembled together with a removable attachment.

6. The mould (1) according to any one of claims 1 to 5, wherein the barrel (2b) is configured, on the one hand, to be in abutment against the radii (21a) of the main body (2a) and to be located at a distance from the angular sectors (3) when the mould (1) is at ambient temperature and, on the other hand, to be in abutment against the angular sectors (3) and to be located at a distance from the radii (21a) of the main body (2a) when the mould (1) is at a curing temperature of the matrix.

7. The mould (1) according to claim 6, wherein at least one hot positioning member (7a) is located on at least one angular sector (3) or on the barrel (2), said at least one hot positioning member (7a) being configured to penetrate into a complementary hot positioning orifice (7b) located on the barrel (2b) or on an angular sector (3) when said barrel (2b) is in abutment against the angular sectors (3).

8. The mould (1) according to any one of claims 6 to 7, wherein a cold positioning member (8a) is located on the radii (21a) of the main body (2a) or on the barrel, the cold positioning member (8a) being configured to penetrate into a complementary cold positioning recess or groove (8b) located on the barrel (2b) or on the radii (21a) when said barrel (2b) is in abutment against the radii (21a) of the main body (2a).

9. A method for manufacturing a turbomachine fan casing made of a composite material with fibrous reinforcement densified by a matrix with a mould according to any one of claims 1 to 8, comprising the following steps:
- (100) winding a fibrous fan casing preform (P) around the barrel (2b) of the impregnation mandrel (2);
- (200) assembling the plurality of angular sectors (3) on the external contour of the impregnation mandrel (2) around which the fibrous preform (P) is wound;
- (300) heating the mould (1) in order to compress the fibrous preform (P) between the barrel (2b) and the angular sectors (3);
- (400) injecting a precursor material of the matrix into the fibrous preform (P);
- (500) polymerising the precursor material of the matrix.

10. The method according to claim 9, wherein the method comprises assembling the plurality of annular sections (21b, 22b) in order to form the barrel (2b).
